# EUROPÄISCHE PATENTSCHRIFT

(11) **EP 0 585 544 B1**
(45) Veröffentlichungstag und Bekanntmachung des Hinweises auf die Patenterteilung: **11.02.1998**
(21) Anmeldenummer: 93108906.4
(22) Anmeldetag: 03.06.1993
(51) Int. Cl.: C01B 13/22

(54) **Silicium-Aluminium-Mischoxid**
Silicon aluminium mixed oxide
Oxyde mixte de silicium et d'aluminium

(30) Priorität: 28.08.1992 DE 4228711
(43) Veröffentlichungstag der Anmeldung: 09.03.1994
(73) Patentinhaber: Degussa Aktiengesellschaft, 60311 Frankfurt (DE)
(72) Erfinder: Mangold, Helmut, Dr., W-6458 Rodenbach (DE); Hartmann, Werner, Dr., W-6113 Babenhausen (DE); Kleinschmit, Peter, Dr., W-6450 Hanau 9 (DE); Kerner, Dieter, Dr., W-6450 Hanau (DE); Rudolph, Thomas, Dr., W-6450 Hanau 9 (DE)

(56) Entgegenhaltungen:
- EP-A- 0 023 588
- DE-A- 2 048 220
- DE-A- 3 835 966
- DE-C- 952 891

## Beschreibung

Die Erfindung betrifft ein Silicium-Aluminium-Mischoxid, ein Mullitpulver und daraus hergestellte Sinterkörper sowie Verfahren zur Herstellung dieser Stoffe.

Mullit ist eine Verbindung von Aluminiumoxid und Siliciumoxid im Verhältnis (Al₂O₃ : SiO₂) von 3 : 2. Er kann wegen seiner guten mechanischen Eigenschaften bei hohen Temperaturen als Hochleistungskeramik eingesetzt werden.

Die Herstellung hochdisperser Mischoxide wird beschrieben in DE 952 891 und DE 29 31 585. Die Herstellung eines Mullit-Aluminium-oxid-Sinterkörpers wird beschrieben in DE 38 35 966.

Es ist bekannt, daß sich die Oxide von Siliciumdioxid und Aluminiumoxid sowohl einzeln als auch zusammen herstellen lassen, indem man die Chloride im verdampften Zustand in einer Knallgasflamme mit dem in dieser Flamme entstehenden Wasser abreagieren läßt, wobei feinteiliges Oxid gebildet wird (DE-A 952 891).

Es ist aus EP-A-0023588 bekannt ein Aluminium-Silicium-Misch-oxid mit der Zusammensetzung 0.5 bis 20 Gew.% Siliciumdioxid. Rest Al₂O₃ auf pyrogenem Wege herzustellen. Dieses Mischoxid wird als Wärmedammaterial eingesetzt.

Gegenstand der Erfindung ist ein flammenhydrolytisch, vorzugsweise auf pyrogenem Wege hergestelltes Silicium-Aluminium-Mischoxid-Pulver mit einer Zusammensetzung von 65 bis 72,1 Gew.-% Al₂O₃, 27,9 bis 35 Gew.% SiO₂, welches dadurch gekennzeichnet ist, daß es eine amorphe Struktur aufweist, jedes Primärteilchen sowohl Anteile von SiO₂ als auch von Al₂O₃ enthält, die Primärteilchen zwischen 7 und 80 nm, vorzugsweise zwischen 10 und 40 nm groß sind, und die spezifische Oberfläche des Pulvers zwischen 20 und 200, vorzugsweise > 70 bis 200 m²/g liegt.

Ein weiterer Gegenstand der Erfindung ist ein Mullitpulver, hergestellt aus dem erfindungsgemäßen Silicium-Aluminium-Mischoxid-Pulver mit einer Zusammensetzung von 65 bis 72,1 Gew.-% Al₂O₃, 27,9 bis 35 Gew.-% SiO₂, welches aus Primärkristalliten besteht, die zwischen 20 und 400 nm groß sind, die miteinander verwachsen sein können, wobei die Mullitphase röntgendiffraktometrisch nahezu ohne amorphe Anteile und ohne Anteile von Aluminiumoxid ist.

Die erfindungsgemäßen Pulver können weiterhin die in der Tabelle 1 aufgeführten Daten aufweisen.

**Tabelle 1**

| Pulver | SiO₂-Al₂O₃-Mox | Mullit |
|---|---|---|
| Al₂O₃ (Gew.-%) | 65 - 72,1 | 65 - 72,1 |
| SiO₂ (Gew.-%) | 27,9 - 35 | 27,9 - 35 |
| Spezifische Oberfläche (m²/g) | 20 - 200 | 10 - 50 |
| Primärteilchengröße (nm) | 7 - 80 | 40 - 400 |
| Stampfdichte (g/l) | 30 - 90 | 200 - 1800 |
| Kristallphase | amorph | Mullit |

Ein weiterer Gegenstand der Erfindung ist ein Verfahren zur Herstellung des erfindungsgemäßen flammenhydrolytisch hergestellten Sllicium-Aluminium-Mischoxid-Pulvers, welches dadurch gekennzeichnet ist, daß man Silicium- und Aluminiumhalogenide, vorzugsweise die Chloride, verdampft, die Dampfmengen entsprechend dem später gewünschten Verhältnis der Oxide von Aluminium und Silicium zusammen mit einem Traggas, z. B. Stickstoff, in einer Mischeinheit mit Luft, Sauerstoff und Wasserstoff homogen mischt, diese einem Brenner bekannter Bauart (z. B. gemäß DE 974 793) zuführt und innerhalb einer Brennkammer in einer Flamme zur Reaktion bringt, anschließend die heißen Gase und den Feststoff in einer Wärmetauschereinheit abkühlt, dann die Gase vom Feststoff abtrennt, und gegebenenfalls am Produkt anhaftende Halogenidreste durch eine Wärmebehandlung mit befeuchteter Luft entfernt.

Ein weiterer Gegenstand der Erfindung ist ein Verfahren zur Herstellung des erfindungsgemäßen Mullitpulvers unter Verwendung des erfindungsgemäßen Silicium-Aluminium-Mischoxid-Pulvers, durch Sinterbehandlung dieses Pulvers bei Temperaturen zwischen 1100 und 1700 °C, vorzugsweise bei 1300 - 1400, insbesondere bei 1350 °C, wobei der Sintervorgang selbst entweder ohne weitere Vorbehandlung des Pulvers oder in einer anderen Ausführungsform mit verdichtetem Material, beispielsweise durch wäßrige Aufschlämmung des Pulvers sowie wahlweise einer sich an den Sintervorgang anschließenden Zerkleinerung oder Mahlung erfolgen kann.

Ein weiterer Gegenstand der Erfindung ist die Verwendung des erfindungsgemäßen Mullitpulvers zur Herstellung von. Keramiken und Keramikvorprodukten, insbesondere für thermisch und mechanisch hoch beanspruchte keramische Werkstoffe.

### Vorteile

Die hohe Teilchenfeinheit sowohl des Siliciumoxid-Aluminiumoxid-Mischoxides als auch des Mullitpulvers erhöhen die Sintergeschwindigkeit und erlauben das Sintern bei niedrigen Temperaturen.

Für die Herstellung von Mullitpulvern aus den pyrogenen Mischoxiden geeigneter Stöchiometrie bietet das hier vorgestellte erfindungsgemäße Verfahren mehrere Vorteile:
1. Es lassen sich sehr reine und sehr feinteilige Pulver erzeugen.
   a) Die in großer Reinheit einsetzbaren Ausgangsstoffe AlCl₃ und SiCl₄ gelangen über die Dampfphase in den Reaktionsraum, wobei eventuelle Verunreinigungen im Verdampfer zurückbleiben.
   b) Die Feinteiligkeit der Pulver ist über bestimmte Prozeßparameter steuerbar. Höhere Feinteiligkeit bedeutet höhere Sinteraktivität. Hohe Sinteraktivität führt zu hohen Sinterdichten schon bei relativ niedrigen Sintertemperaturen, was zu dem gewünschten Effekt eines feinkörnigen Gefüges des gesinterten Materials führt.

   Die Kombination dieser Effekte führt zu guten mechanischen Eigenschaften.
2. Im Vergleich zu bekannten Verfahren der Mullitpulverherstellung (beispielsweise Sol-Gel-Verfahren oder verwandte Verfahren) sind nur wenige Verfahrensschritte erforderlich, so daß beim erfindungsgemäßen Verfahren ein preisgünstiges Produkt erzeugt werden kann.
   So wird bei den bekannten Sol-Gel- und verwandten Verfahren im Regelfall ein Gel hergestellt, das zuerst neutralisiert, dann getrocknet und gemahlen werden muß. Es schließt sich dann eine thermische Behandlung der Pulver an, in deren Verlauf die Mullitisierung eintritt. In der Regel erfolgt eine weitere Mahlung des mullitisierten Pulvers.
   Im Gegensatz zu den bekannten Sol-Gel-Verfahren kann bei dem erfindungsgemäßen Verfahren die erste Mahlung völlig entfallen, da das in der Flamme hergestellte Pulver bereits eine ausreichende Teilchenfeinheit hat. Weiterhin entfällt der Neutralisiationsschritt und - falls das Pulver ohne Verdichtung in flüssiger Phase verwendbar ist - der beim Sol-Gel-Verfahren notwendige Trocknungsschritt.

### Beispiel

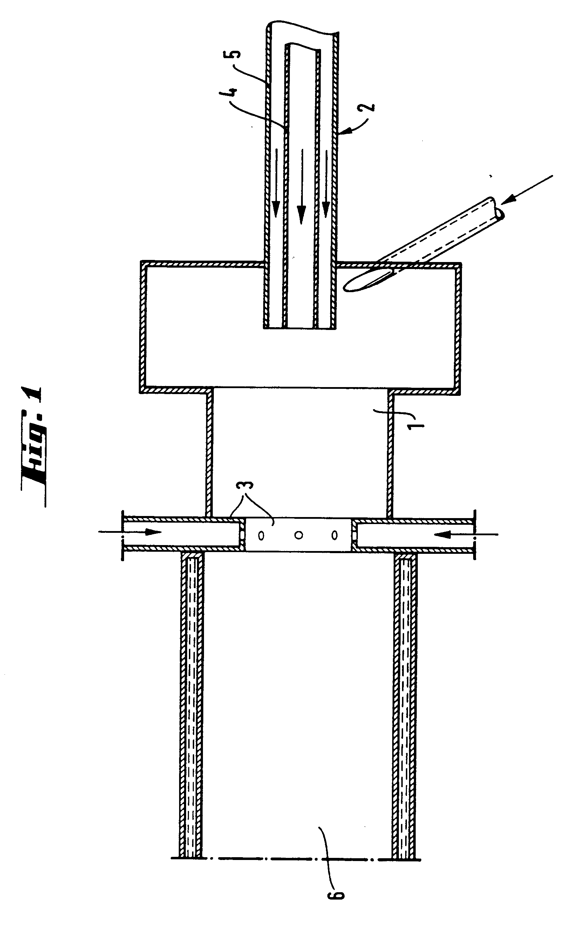

In Figur 1 ist schematisch die Brenneranordnung gezeigt: In eine Brennkammer (1) ragt ein Doppelmantelrohr (2). In diese Brennkammer wird Sekundärluft eingeblasen. Hinter der "Brennkammer" befindet sich eine Ringblende (3), aus der zusätzlich Luft eingegeben werden kann. Im Innenrohr (4) des Doppelmantelrohres werden die Metallhalogeniddämpfe und die "Primärluft" geführt, wahlweise auch hier der Wasserstoff, im äußeren Ring (5) ebenfalls Wasserstoff.

Die Menge an flüssigem SiCl₄ wird mittels eines Rotameters gemessen, das SiCl₄ dann bei einer Temperatur von ca. 130 °C in einer separaten Einheit verdampft und dann mit der auf ca. 300 °C erwärmten Primärluft gemischt. Diese Luft-SiCl₄-Mischung kann, bevor sie in das Doppelmantelrohr (2) geführt wird, nochmals auf ca. 200 bis 300 °C aufgeheizt werden. Das AlCl₃ wird in einem geheizten Feststoffverdampfer (Temperatur ca. 530 °C) verdampft. Dazu wird mittels einer Differentialdosierwaage das pulverförmige AlCl₃ in den Verdampfer eingetragen. Der Aluminiumchloriddampf wird unter Anlegen eines Stickstoffstromes (100 l/h) in das Innenrohr (4) des Doppelmantelrohres (2) geleitet, wo er sich mit dem erhitzten SiCl₄-Luftgemisch vermischt. Der für die Flammenhydrolyse notwendige Wasserstoff wird entweder in die Mitte des Doppelmantelrohres (2) sowie zusätzlich oder auch ausschließlich (wahlweise auch vorgeheizt) in den äußeren Ringmantel (5) des Brenners eingespeist.

Die Flamme brennt schlauchförmig in ein wassergekühltes Flammrohr (6). Vor dem Flammrohr (6) sitzt eine Ringblende (3), aus der Blendenluft ringförmig nach innen gerichtet ausströmt.

In Tabelle 2 sind die experimentellen Bedingungen zur Herstellung des Pulvers nach Anspruch 1 angegeben.

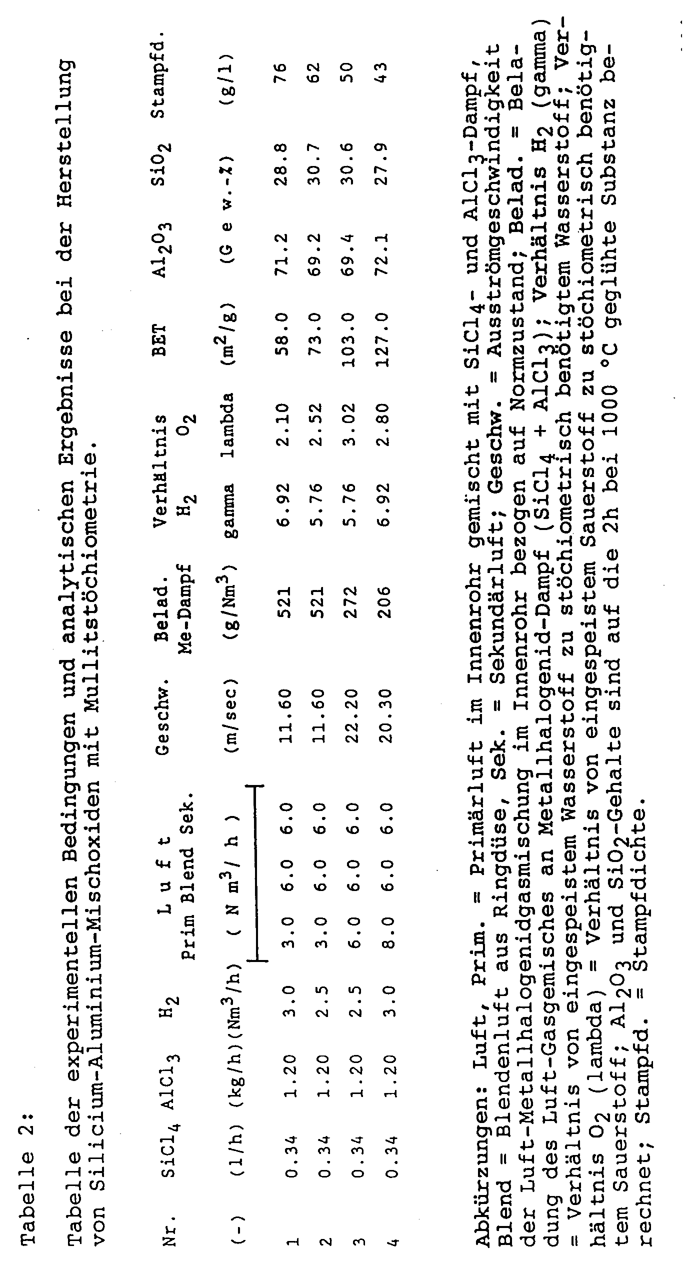

Die spezifische Oberfläche des Mullitvorproduktpulvers läßt sich durch verschiedene Maßnahmen beeinflussen. Als mögliche veränderbare Parameter seien neben anderen das Luft-Wasserstoff-Verhältnis und die Ausströmgeschwindigkeit der Gase genannt. Nach dem Passieren eines Flammrohrs werden die pyrogen hergestellten Pulver nach bekannten Verfahren z. B. in einem Filter oder durch Zyklone von den salzsäurehaltigen Gasen abgetrennt.

Das Pulver kann in einem weiteren Schritt durch eine thermische Behandlung von anhaftenden Salzsäureresten befreit werden. Für die erfindungsgemäße Verwendung als Mullitvorprodukt ist dies jedoch nicht unbedingt erforderlich.

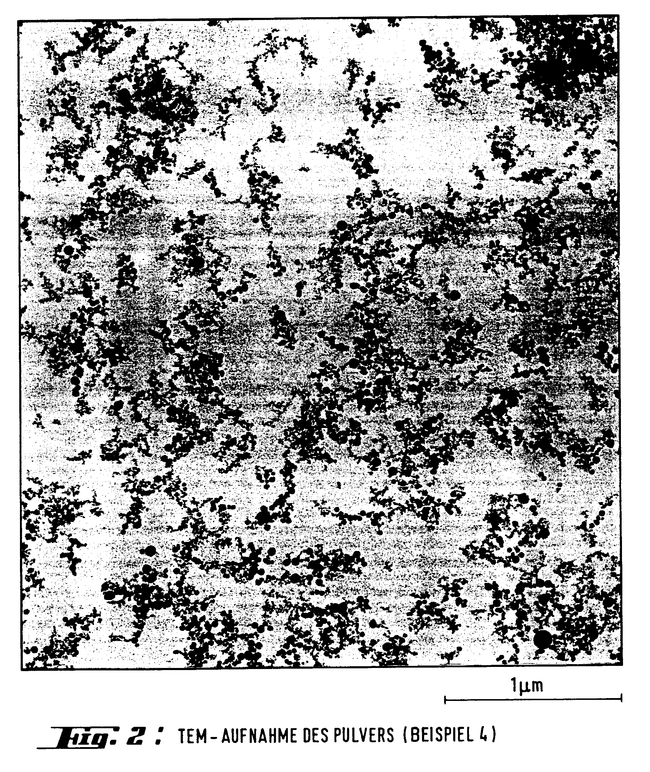

Figur 2 zeigt eine elektronenmikroskopische Aufnahme des Mullitvorproduktpulvers, wie es nach dem beschriebenen Verfahren und den experimentellen Bedingungen des Beispiels 4 hergestellt wurde.

Figur 2 zeigt, daß im Pulver kreisförmige Einzelteilchen vorliegen, die zu himbeerartigen Gebilden miteinander verwachsen sind.

Röntgendispersive Untersuchungen zeigen, daß sich die analysierten Kugeln aus wechselnden Anteilen von Siliciumdioxid und Aluminiumoxid zusammensetzen, wobei keine Beziehung zwischen der Zusammensetzung der Kugeln mit dem Durchmesser erkennbar ist.

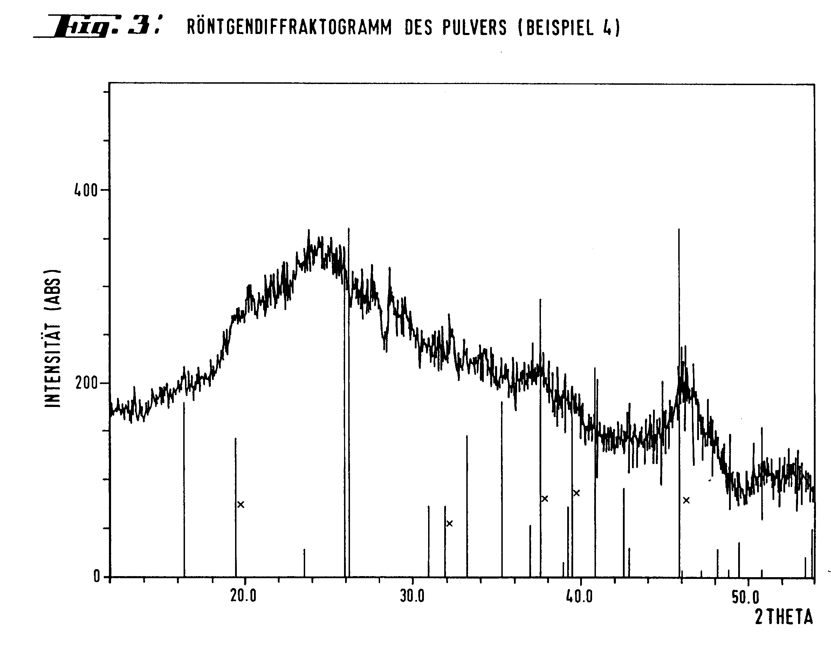

Das Röntgendiffraktogramm des Vorproduktpulvers (Beispiel 4), gezeigt in Figur 3, weist keine kristallinen Anteile von Mullit oder Aluminiumoxid auf.

### Beispiele zum Mullitisieren der Vorproduktpulver

Die Pulver hoher Oberfläche werden einer Sinterbehandlung unterzogen. Dabei wird in einem Vorverdichtungsschritt das Pulver verdichtet. Das Pulver wird in Wasser suspendiert und anschließend bei 120 °C getrocknet. Die getrocknete Masse wird 3 bzw. 12 Stunden bei 1350 °C geglüht. Die geglühte Substanz wird in einem Mörser zerkleinert.

Die nach dieser Methode hergestellten Pulver eignen sich als Pulver zur Herstellung von keramischen Bauteilen.

**Tabelle 3**

| Spezifische Oberfläche BET (m²/g) | | | |
|---|---|---|---|
| Glühdauer | Ohne | 3 h | 12 h |
| Produkt | | | |
| 1 | 58 | 25 | 22 |
| 2 | 73 | 27 | 24 |
| 3 | 103 | 31 | 26 |
| 4 | 127 | 31 | 27 |

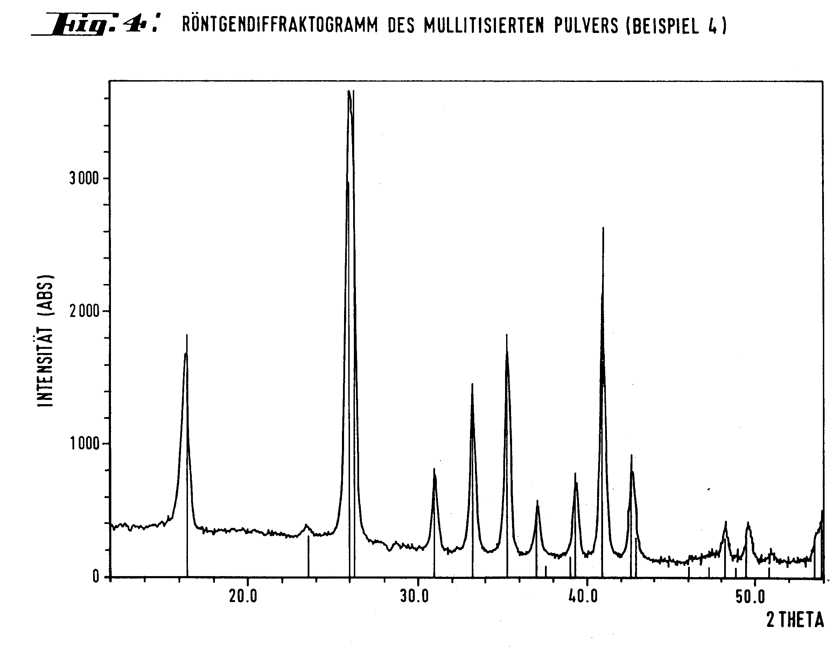

Figur 4 zeigt das Röntgendiffraktogramm des Pulvers des Beispiels 4, das nach der pyrogenen Herstellung wäßrig aufgeschlämmt wurde, die Suspension dann getrocknet, und das verdichtete Material dann 12 Stunden bei 1350 °C geglüht wurde.

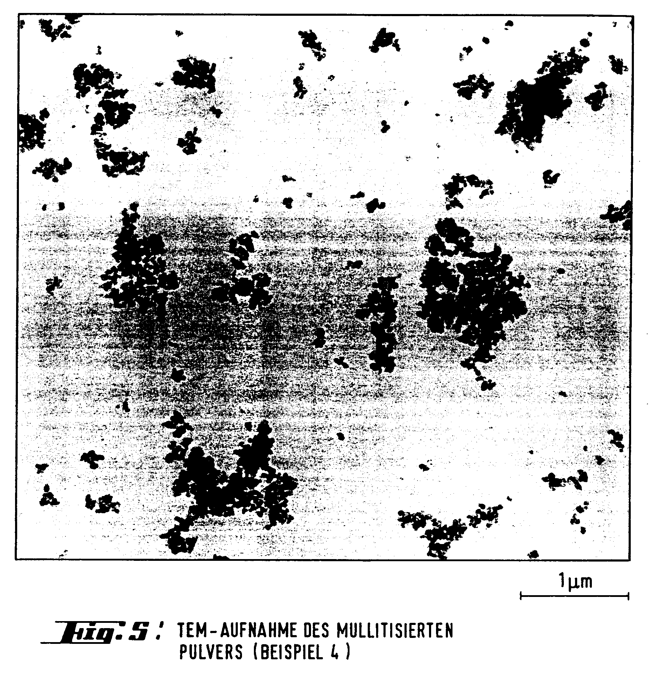

Figur 5 ist eine TEM-Aufnahme des so behandelten Materials, welches nach der Sinterung noch zermörsert wurde.

Deutlich erkennbar ist die für den Sinterprozeß günstige Größenverteilung der mullitisierten Partikel.

Die erfindungsgemäßen Vorproduktpulver der Beispiele 1, 3 und 4 wurden in Wasser suspendiert und sprühgetrocknet. Die sprühgetrockneten Pulver wiesen folgende Schütt- und Stampfdichten auf:

**Tabelle 4**

| Dichten der sprühgetrockneten Pulver | | |
|---|---|---|
| Pulver nach Beispiel | Schüttdichte (g/l) | Stampfdichte (g/l) |
| Nr. 1 | 343 | 447 |
| Nr. 3 | 256 | 323 |
| Nr. 4 | 225 | 276 |

Die sprühgetrockneten Pulver wurden bei Raumtemperatur mit einem Druck von 200 MPa zu Tabletten mit einem Durchmesser von 13 mm und einer Höhe von ca. 20 mm isostatisch verpreßt.

Diese Tabletten wurden an Luft in einem Kammerofen nach folgendem Sinterprogramm gesintert:

Ausgehend von Raumtemperatur wird mit einer Heizrate von 250 K/h eine Temperatur von 1300 °C erreicht, und diese 6 Stunden gehalten, dann mit einer Heizrate von 120 K/h wird die Temperatur auf 1620 °C erhöht, und diese Temperatur 10 Stunden lang gehalten. Danach wird auf Raumtemperatur abgekühlt.

Die Dichte der sprühgetrockneten und gesinterten Proben wird nach der Auftriebsmethode bestimmt, wobei für Mullit eine theoretische Dichte von 3.156 g/cm³ zugrunde gelegt wurde.

Dabei wurden schon bei den Proben, die nur kalt isostatisch verpreßt, dann suspendiert, sprühgetrocknet und gesintert wurden, über 99 % der theoretischen Dichte von Mullit erreicht (vgl. Tabelle 5).

**Tabelle 5**

| Dichte der sprühgetrockneten und gesinterten Proben | |
|---|---|
| Pulver nach Beispiel | Dichte (%) |
| Nr. 1 | 99.10 |
| Nr. 3 | 99.14 |
| Nr. 4 | 99.30 |

## Patentansprüche

1. Flammenhydrolytisch hergestelltes Silicium-Aluminium-Mischoxid-Pulver mit einer Zusammensetzung von 65 bis 72,1 Gew.-% Al₂O₃, 27,9 bis 35 Gew.% SiO₂, dadurch gekennzeichnet, daß es eine amorphe Struktur aufweist, jedes Primärteilchen sowohl Anteile von SiO₂ als auch von Al₂O₃ enthält, die Primärteilchen zwischen 7 und 80 nm, vorzugsweise zwischen 10 und 40 nm groß sind, und die spezifische Oberfläche des Pulvers zwischen 20 und 200 m²/g liegt.

2. Mullitpulver, hergestellt aus dem Pulver nach Anspruch 1 mit einer Zusammensetzung von 65 bis 72,1 Gew.-% Al₂O₃, 27,9 bis 35 Gew.% SiO₂, welches aus Primärkristalliten besteht, die zwischen 40 und 400 nm groß sind, die miteinander verwachsen sein können, wobei die Mullitphase röntgendiffraktometrisch nahezu ohne amorphe Anteile und ohne Anteile von Aluminiumoxid ist.

3. Verfahren zur Herstellung des flammenhydrolytisch hergestellten Silicium-Aluminium-Oxid-Pulvers nach Anspruch 1, dadurch gekennzeichnet, daß man Silicium- und Aluminiumhalogenide verdampft, die Dampfmengen entsprechend dem später gewünschten Verhältnis der Oxide von Aluminium und Silicium zusammen mit einem Traggas in einer Mischeinheit mit Luft, Sauerstoff und Wasserstoff homogen mischt, diese einem Brenner bekannter Bauart zuführt und innerhalb einer Brennkammer in einer Flamme zur Reaktion bringt, anschließend die heißen Gase und den Feststoff in einer Wärmetauschereinheit abkühlt, dann die Gase vom Feststoff abtrennt, und gegebenenfalls am Produkt anhaftende Halogenidreste durch eine Wärmebehandlung mit befeuchteter Luft entfernt.

4. Verfahren zur Herstellung des Pulvers nach Anspruch 2, dadurch gekennzeichnet, daß das Pulver nach Anspruch 1 bei Temperaturen zwischen 1100 und 1700 °C, vorzugsweise bei 1300 - 1400 °C, insbesondere bei 1350 °C gesintert wird, wobei der Sintervorgang selbst entweder ohne weitere Vorbehandlung des Pulvers oder in einer anderen Ausführungsform mit verdichtetem Material, beispielsweise durch wäßrige Aufschlämmung des Pulvers sowie wahlweise einer sich an den Sintervorgang anschließenden Zerkleinerung oder Mahlung erfolgen kann.

5. Verwendung der Pulver nach Anspruch 1 und 2 zur Herstellung von Keramiken und Keramikvorprodukten, insbesondere für thermisch und mechanisch hoch beanspruchte keramische Werkstoffe.

## Claims

1. Silicon/aluminium mixed oxide powder produced by flame hydrolysis having a composition of 65 to 72.1 wt.% of Al₂O₃, 27.9 to 35 wt.% of SiO₂, characterised in that it has an amorphous structure, each primary particle contains fractions of both SiO₂ and of Al₂O₃, the primary particles are between 7 and 80 nm, preferably between 10 and 40 nm in size and the specific surface area of the powder is between 20 and 200 m²/g.

2. Mullite powder produced from the powder according to claim 1 having a composition of 65 to 72.1 wt.% of Al₂O₃, 27.9 to 35 wt.% of SiO₂, which consists of primary crystallites which are between 40 and 400 nm in size, which crystallites may be intergrown with each other, wherein, according to X-ray diffractometry, the mullite phase contains virtually no amorphous fractions and no fractions of aluminium oxide.

3. Process for the production of the silicon/aluminium oxide powder produced by flame hydrolysis according to claim 1, characterised in that silicon and aluminium halides are vaporised, the vapours, present in quantities corresponding to the subsequently desired ratio of aluminium and silicon oxides, are homogeneously mixed, together with a carrier gas, with air, oxygen and hydrogen in a mixing unit, the vapours are fed into a burner of a known design and reacted in a flame within a combustion chamber, the hot gases and the solid are then cooled in a heat exchange unit, the gases are then separated from the solid and any halide residues possibly adhering to the product are removed by thermal treatment with moistened air.

4. Process for the production of the powder according to claim 2, characterised in that the powder according to claim 1 is sintered at temperatures of between 1100 and 1700°C, preferably at 1300-1400°C, in particular at 1350°C, wherein the sintering process may itself proceed either without further pretreatment of the powder or, in another embodiment, with compacted material, for example by means of an aqueous suspension of the powder optionally together with comminution or grinding subsequent to the sintering operation.

5. Use of the powders according to claims 1 and 2 for the production of ceramics and ceramic precursors, in particular for ceramic materials exposed to elevated thermal and mechanical loads.

## Revendications

1. Poudre d'oxyde mixte de silicium-aluminium préparée par hydrolyse à la flamme, dont la composition comprend du Al₂O₃ à concurrence de 65 à 72,1% en poids et du SiO₂ à concurrence de 27,9 à 35% en poids, caractérisée en ce qu'elle présente une structure amorphe, chaque particule primaire contient des fractions aussi bien de SiO₂ que de Al₂O₃, les particules primaires dont la dimension se situe entre 7 et 80 nm, de préférence entre 10 et 40 nm, et la surface spécifique de la poudre se situe entre 20 et 200 m²/g.

2. Poudre de mullite préparée à partir de la poudre selon la revendication 1, dont la composition comprend du Al₂O₃ à concurrence de 65 à 72,1% en poids et du SiO₂ à concurrence de 27,8 à 37% en poids, qui est constituée par des cristallites primaires dont la dimension se situe entre 40 et 400 nm et que l'on peut faire croître les uns avec les autres, la phase de mullite, si l'on se réfère à une analyse par diffraction, étant pratiquement exempte de fractions amorphes et étant pratiquement exempte de fractions d'oxyde d'aluminium.

3. Procédé pour la préparation de la poudre d'oxyde de silicium-aluminium préparée par hydrolyse à la flamme selon la revendication 1, caractérisé en ce qu'on évapore des halogénures de silicium et d'aluminium, on mélange de manière homogène les quantités de vapeur correspondant au rapport ultérieur désiré des oxydes d'aluminium et de silicium, conjointement avec un gaz porteur dans une unité de mélange avec de l'air, de l'oxygène et de l'hydrogène, on les achemine à un brûleur de construction connue et on les amène à réagir dans une flamme à l'intérieur d'une chambre de combustion, ensuite on refroidit les gaz chauds et la substance solide dans une unité d'échange thermique, ensuite on sépare les gaz de la substance solide et on élimine des résidus d'halogénures adhérant éventuellement au produit via un traitement thermique avec de l'air humidifié.

4. Procédé pour la préparation de la poudre selon la revendication 2, caractérisé en ce qu'on soumet la poudre selon la revendication 1 à un frittage à des températures entre 1100 et 1700°C, de préférence de 1300-1400°C, en particulier à une température de 1350°C, dans lequel on peut procéder au processus de frittage proprement dit soit sans prétraitement ultérieur de la poudre, soit, dans une autre forme de réalisation, avec une matière comprimée, par exemple par une mise en suspension aqueuse de la poudre, ainsi que, si on le souhaite, à une désintégration ou à un broyage faisant directement suite au processus de frittage.

5. Utilisation des poudres selon les revendications 1 et 2 pour la préparation de céramiques et d'ébauches en céramique, en particulier pour des matières premières en céramique soumises à des sollicitations thermiques et mécaniques élevées.
